# EUROPÄISCHE PATENTSCHRIFT

(11) **EP 2 845 713 B1**
(45) Veröffentlichungstag und Bekanntmachung des Hinweises auf die Patenterteilung: **23.11.2016**
(21) Anmeldenummer: 14176896.0
(22) Anmeldetag: 14.07.2014
(51) Int. Cl.: B29C 47/08, B29C 47/60, B29C 47/92, B29C 47/96

(54) **Extruder mit einer Schnecke mit einem automatisch erfassbaren Sensor zur Bereitstellung charakteristischer Informationen für die Antriebseinheit**
Extruder with a screw having an automatically detectable sensor providing characteristic information for the drive unit
Extrudeuse avec une vis disposant des informations charactéristiques pour l'unité d'entraînement

(30) Priorität: 02.08.2013 DE 102013108335
(43) Veröffentlichungstag der Anmeldung: 11.03.2015
(73) Patentinhaber: Leistritz Extrusionstechnik GmbH, 90459 Nürnberg (DE)
(72) Erfinder: Rechter, Frank, 97215 Uffenheim OT Welbhausen (DE); Wolf, Sven, 90522 Oberasbach (DE)
(74) Vertreter: Lindner Blaumeier Patent- und Rechtsanwälte

(56) Entgegenhaltungen:
- EP-A2- 2 065 162
- AT-U1- 7 303
- DE-C1- 19 744 443
- Woywod: "Dosieren von Mahlgut" In: Marcel Grossmann: "Präzise und effizient", 10. September 2010 (2010-09-10), Carl Hanser Verlag, München, XP002736626, Bd. 9/2010, Seiten 67-67, * Spalten 3-4 * * Abbildung 7 *
- N.N.: "UEP-Ultimate Extruder Protection Modular Torque Limiters Engineered for Extruders and Mixers World Leader in Modular Torque Limiters" In: "UEP-Ultimate Extruder Protection Modular Torque Limiters Engineered for Extruders and Mixers World Leader in Modular Torque Limiters", 7 July 2010 (2010-07-07), Brunel Corporation, Wichita Falls, TX, XP055245367, vol. 76302, pages 1-4, * page 3 *

## Beschreibung

Die Erfindung betrifft einen Extruder gemäß Anspruch 1.

Derartige Extruder dienen bekanntlich der Aufbereitung von Massen, die im Arbeitsteil respektive dem Zylinder über die eine oder mehreren dort drehenden Extruderschnecken bearbeitet werden. Lediglich exemplarisch sind Kunststoffmassen zu nennen, die im Extruder aufgeschmolzen und compoundiert werden, um nachfolgend weiterverarbeitet zu werden, beispielsweise zur Bildung von Kunststoffgranulat oder im Rahmen von Spritzgussarbeiten und zur Herstellung von Bauteilen und Ähnlichem. Zu nennen sind des Weiteren exemplarisch pharmazeutische Massen, die der Herstellung von Arzneimitteln beispielsweise in Tablettenform dienen. Auch hier werden die entsprechenden Stoffe im Zylinder über die Schnecken bearbeitet und gemischt etc., um die gewünschte homogene Zusammensetzung des Extrudats zu erzielen. Um dies zu ermöglichen sind am Arbeitsteil vorgesehen respektive dem Arbeitsteil zugeordnet eine oder mehrere weitere Einrichtungen wie beispielsweise entsprechende Zuführeinrichtungen, über die die zu verarbeitenden Stoffe dosiert aufgegeben werden, oder Heizeinrichtungen, die der Temperierung des Zylinders oder der Zylinderabschnitte, aus denen ein solcher Zylinder üblicherweise zusammengesetzt ist, dienen und Ähnliches. Auch im Lebensmittelbereich werden häufig entsprechende Massen unter Verwendung eines Extruders aufbereitet. Wesentlich für die Funktion des Extruders ist natürlich der Antrieb der einen oder im Falle eines Doppelschneckenextruders der beiden Extruderschnecken, da über den Antrieb sowohl das Drehmoment der Schnecken, als auch die Drehzahl der Schnecken, die relevant für die in das aufzubereitende Material eingebrachte Energie sind, eingestellt werden. Dies geschieht über einen Motor und ein entsprechendes Untersetzungsgetriebe, das mit der oder den Schnecken gekoppelt ist. Der Motor ist mit dem Getriebe über eine Kupplung, üblicherweise eine Überlastkupplung, gekoppelt, wobei die Überlastkupplung bei einer entsprechenden schneckenseitig gegebenen Überlast öffnet und Getriebe und Motor trennt. Der grundsätzliche Aufbau und die Funktion eines solchen Extruders ist hinlänglich bekannt.

Ein wesentliches Bauteil eines Extruders ist natürlich die oder sind die Extruderschnecken. Je nach aufzubereitendem Material und nach entsprechender Arbeitsaufgabe werden unterschiedliche Schneckentypen unterschieden. Bekannt sind sogenannte Kompaktschnecken, die aus einem Stück gefertigt sind. Das heißt, dass die spezifische Schneckengeometrie unmittelbar aus einem einzigen Materialblock herausgearbeitet ist. Daneben sind sogenannte gesteckte Schnecken bekannt, bei denen auf eine Schneckenwelle eine Vielzahl einzelner Schneckenelemente der Reihe nach aufgesteckt sind, wobei die Schneckenelemente und die Schneckenwelle über entsprechende Verzahnungen miteinander drehfest verbunden sind. Jedes Schneckenelement weist eine bestimmte Geometrie auf. Je nachdem, welcher Schneckentyp nun konkret in den Zylinder des Arbeitsteils eingebracht wird, sind vom Bediener unterschiedliche Parameter insbesondere hinsichtlich der Motorsteuerung einzustellen, da über Kompaktschnecken üblicherweise höhere Drehmomente übertragen werden können als über eine gesteckte Schnecke. Darüber hinaus sind die einzelnen Extruderschnecken auch hinsichtlich ihrer Geometrie sehr spezifisch auf einen bestimmten Arbeitsprozess ausgelegt, das heißt, dass eine bestimmte Schnecke einer bestimmten Arbeitsaufgabe zugeordnet ist, der wiederum spezifische Betriebsparameter, die der Bediener der Steuerungseinrichtung zum Betrieb des Extruders einstellen muss, zugeordnet sind. Die entsprechende Einstellung dieser Parameter, sei es typenbezogen, sei es geometrie- oder schneckenartbezogen erfolgt vor Beginn des eigentlichen Betriebs durch manuelle Programmierung der Steuerungseinrichtung durch den Bediener, was naturgemäß zeitaufwendig ist, darüber hinaus aber auch fehleranfällig.

Der Erfindung liegt damit das Problem zugrunde, einen Extruder anzugeben, der demgegenüber verbessert ist.

Zur Lösung dieses Problems ist erfindungsgemäß vorgesehen, dass an der Extruderschnecke wenigstens ein die Extruderschnecke kennzeichnendes Informationselement vorgesehen ist, das während oder nach Einsetzen der Extruderschnecke in den Zylinder oder Verbinden mit dem Getriebe mittels eines Sensorelements automatisch erfassbar ist, wobei die Steuerungseinrichtung den Betrieb des Motors oder der weiteren Einrichtung in Abhängigkeit der erfassten Information steuert, wobei das Informationselement eine Information dahingehend, ob es eine Kompaktschnecke oder eine Extruderschnecke mit auf eine Schneckenwelle gesteckten Schneckenelementen ist, enthält, und wobei die Steuerungseinrichtung dazu eingerichtet ist, in Abhängigkeit der erfassten Information einen Frequenzumrichter zur Einstellung eines vom Motor gelieferten Drehmoments und/ oder der Motordrehzahl sowie die Kupplung, die als im Abschaltmoment umschaltbare Kupplung ausgeführt ist, in Abhängigkeit der erfassten Information zur Nachführung des Abschaltmoments zu steuern.

Erfindungsgemäß zeichnet sich der Extruder durch eine automatische Erfassung einer schneckenspezifischen Information mittels eines geeigneten Sensorelements, das mit der Steuerungseinrichtung kommuniziert, aus. Hierzu ist an der Extruderschnecke ein entsprechendes Informationselement vorgesehen, das die Information in codierter Form trägt. Dieses Informationselement wird über ein entsprechendes Sensorelement erfasst und an die Steuerungseinrichtung gegeben, die nun gestützt auf diese Informationen in der Lage ist, zumindest einen Teil der entsprechenden Betriebsparameter, die zur Steuerung des Motors und/oder einer oder mehrerer weiterer Einrichtungen schneckenspezifisch einzustellen sind, automatisch einstellt und die entsprechende Steuerung hierauf basierend vornimmt. Da diese Erfassung und Parameterauswahl folglich automatisch erfolgt, ist der Bediener nicht mehr gefordert, diese Einstellungen manuell vorzunehmen.

Die Informationserfassung erfolgt dabei automatisch, wenn die Extruderschnecke entweder in den Zylinder eingebracht wird, oder wenn sie sich in der Montagestellung im Zylinder befindet bzw. mit dem Getriebe gekoppelt ist. Dies hängt letztlich davon ab, wo das Informationselement an der Extruderschnecke und das Sensorelement am Extrudergestell selbst positioniert ist.

Das Informationselement kann dabei eine Information dahingehend, ob es eine Kompaktschnecke oder eine Extruderschnecke mit auf die Schneckenwelle gesteckten Schneckenelementen ist, sein oder enthalten. Über diese Information wird also in codierter Form der jeweilige Schneckentyp kommuniziert und automatisch seitens der Steuerungseinrichtung erkannt. Diese kann daraufhin, je nach erkanntem Typ, insbesondere den Betrieb des Motors entsprechend steuern, so dass das schneckenspezifische Drehmoment übertragen wird, das wie beschrieben bei Kompaktschnecken höher ist als bei Steckschnecken, wie auch die schneckenspezifische Motordrehzahl entsprechend eingestellt wird. Zusätzlich oder alternativ kann das Informationselement auch eine Information dahingehend enthalten, welcher Art Arbeitsverfahren die Extruderschnecke zugeordnet ist. Über diese Information wird folglich die Schneckenart kommuniziert und seitens der Steuerungseinrichtung erfasst. Eine Schnecke ist wie beschrieben üblicherweise einem bestimmten Verfahren zugeordnet, das der Aufbereitung einer bestimmten, definierten Masse unter Zugrundelegung bestimmter definierter Betriebsparameter des Extruders dient. Mitunter wird nun durch einen Schneckenwechsel von einem bisher auf dem Extruder durchgeführten Verfahren auf ein anderes Verfahren gewechselt. Üblicherweise muss der Bediener manuell die entsprechenden Verfahrensparameter an der Steuerungseinrichtung einstellen. Dies ist erfindungsgemäß nun nicht erforderlich, da durch die Erfassung der entsprechenden Information die automatische Schneckenerkennung erfolgt und seitens der Steuerungseinrichtung die entsprechenden Betriebsparameter automatisch eingestellt werden. Auch diese Betriebsparameter können beispielsweise das Drehmoment oder die Drehzahl sein, jedoch sind auch andere Betriebsparameter in diesem Zusammenhang einstellbar, worauf nachfolgend noch eingegangen wird.

Wie ausgeführt steuert die Steuerungseinrichtung in Abhängigkeit der erfassten Information den Betrieb des Motors, indem das gelieferte Drehmoment und/oder die Motordrehzahl entsprechend eingestellt wird. Dies geschieht erfindungsgemäß über einen Frequenzumrichter, der über die Steuerungseinrichtung angesteuert wird. Wie beschrieben ist der Motor über eine Kupplung mit dem Getriebe gekoppelt. Als Kupplung kommt erfindungsgemäß eine schaltbare Kupplung zum Einsatz, die in ihrem Abschaltmoment dementsprechend einstellbar respektive schaltbar ausgeführt ist, und die ebenfalls über die Steuerungseinrichtung in Abhängigkeit der erfassten Information gesteuert wird. Wird seitens der Steuerungseinrichtung ein höheres Drehmoment zugelassen respektive eingestellt, so wird über die erfindungsgemäß vorgesehene schaltbare Kupplung diese Momentenveränderung auch kupplungsseitig nachvollzogen. Das heißt, dass bei Lieferung eines höheren Drehmoments vom Motor auch automatisch die Kupplung entsprechend umgeschaltet wird, um das höhere Drehmoment zu übertragen. Da die Kupplung als Sicherheitselement dient, das das Getriebe und den Motor trennt, wenn an einer Seite ein zu hohes Drehmoment anliegt, was beispielsweise bei Überlast im Schneckenbereich gegeben sein kann, wird über die Steuerungseinrichtung auch ein höheres Abschaltmoment eingestellt, wenn der Motor zur Lieferung eines höheren Drehmoments umgeschaltet wird. Die Kupplung wird folglich hinsichtlich des Abschaltmoments nachgeführt, wenn der Motor entsprechend umgeschaltet wird.

Als eine solche schaltbare Kupplung wird vorzugsweise eine druckbeaufschlagte Reibkupplung vorgesehen. Diese Kupplung weist Reibscheiben auf, die mittels Luftdruck gegeneinander gepresst werden. Je nachdem wie der Anpressdruck ist variiert das Durchrutschmoment und folglich das übertragbare Drehmoment. Über zwei Sensoren, die den beiden Reibscheiben respektive dem vorderen und hinteren Kupplungsteil zugeordnet sind, können etwaige Rotationsgeschwindigkeitsdifferenzen der beiden Scheiben und damit der Durchrutschzeitpunkt erfasst werden. Sobald ein definierter Geschwindigkeitsunterschied erfasst wird, wird der Druck schlagartig reduziert, so dass folglich der Anpressdruck abrupt abnimmt und die Kupplung öffnet. Mittels einer solchen druckbeaufschlagten Kupplung ist folglich ein Umschalten hinsichtlich des übertragbaren Drehmoments respektive die Einstellung des Sicherheitsabschaltmoments auf einfache Weise möglich.

Wie beschrieben sind die spezifischen Schnecken häufig bestimmten Arbeitsverfahren zugeordnet, sei es hinsichtlich der zu verarbeitenden Stoffe, sei es hinsichtlich der konkreten abschnittsweisen Arbeitsvorgänge im Zylinder, beispielsweise einem Fördern der Masse, einem Kneten der Komponenten und Ähnlichem. Diese spezifischen Verfahren zeichnen sich wiederum durch spezifische Betriebsparameter der einzelnen relevanten Extruderkomponenten aus. Auch diese werden erfindungsgemäß nach Erkennung der Schneckenart automatisch eingestellt, wozu die Steuerungseinrichtung als weitere Einrichtung in Abhängigkeit der erfassten Information beispielsweise ein oder mehrere am Arbeitsteil vorgesehene Heizeinrichtungen, über die der Zylinder geheizt werden kann, steuert. Zusätzlich oder alternativ kann sie auch den Betrieb einer oder mehrerer am Arbeitsteil zugeordneter Zuführeinrichtungen, über die der oder die verschiedenen, im Arbeitsteil zu bearbeitenden Stoffe dosiert zugeführt werden, steuern. Denkbar ist auch die Steuerung des Betriebs einer dem Arbeitsteil nachgeschalteten Pumpen, über die die extrudierte Masse gepumpt wird und Ähnliches. Die Steuerungseinrichtung stellt nun die konkreten, der erfassten Schnecke zugeordneten Verfahrensparameter ein, um den Motor respektive die entsprechenden weiteren Einrichtungen schneckenspezifisch und damit verfahrensspezifisch zu steuern.

Selbstverständlich sind in der Steuerungseinrichtung entsprechende Betriebsparameter respektive verfahrensspezifische Parametertabellen oder dergleichen abgelegt, die wiederum den entsprechenden schneckenspezifischen Informationen zugeordnet sind. Die Steuerungseinrichtung wählt nun automatisch mit Erfassen einer Schneckeninformation den oder die informationsspezifisch zugeordneten Steuerungsparameter aus und lädt diese, um gestützt darauf den nachfolgenden Betrieb, welcher Komponente auch immer, zu steuern.

Die Steuerungseinrichtung ist zweckmäßigerweise auch zur Speicherung schneckenbezogener Informationen basierend auf der erfassten Information ausgebildet. Dies ermöglicht eine Dokumentation schneckenbezogener Informationen in der Steuerungseinrichtung selbst. Diese Informationen können nun, nachdem die konkrete Schnecke aufgrund ihrer Identifizierung bekannt ist, eben dieser Schnecke konkret zugeordnet werden. Als eine solche Information kann beispielsweise die Einsatzzeit respektive Gesamtgebrauchsdauer dieser spezifischen Schnecke in diesem spezifischen Extruder gespeichert werden. Beispielsweise kann durch einen Vergleich mit Erfahrungswerten üblicher Standzeiten die Ersatzteilbeschaffung von Schneckenelementen im Falle einer Steckschnecke oder eine etwaige Überholung einer Kompaktschnecke rechtzeitig erfasst und koordiniert werden. Im Pharmabereich kann beispielsweise die Zuordnung einer spezifischen Schnecke zu einer spezifischen Charge, die auf dem Extruder produziert wurde, erfolgen, was aus Dokumentationsgründen ebenfalls zweckmäßig ist. Das Risiko einer Fehlbedienung kann folglich grundsätzlich minimiert werden.

Als Informationselemente und zugeordnete Sensorelemente sind unterschiedliche Ausgestaltungen denkbar. Nach einer ersten Erfindungsalternative kann das Informationselement ein Chip, insbesondere ein RFID-Chip und das Sensorelement ein berührungslos arbeitendes Chiplesegerät, insbesondere RFID-Lesegerät sein. Bei dieser Ausgestaltung kommt ein Transponderchip zum Einsatz, der berührungslos über das entsprechende Chiplesegerät ausgelesen werden kann. Ein solcher Chip ist sehr kleinbauend und kann ohne weiteres an der Schnecke angeordnet werden, beispielsweise schaftseitig verklebt oder in eine Ausnehmung eingebettet werden etc. Die Erfassung ist auch ohne weiteres über eine gewisse Distanz möglich, so dass die Chipinformation selbst dann ausgelesen werden kann, wenn der Chip und das Lesegerät einander nicht unmittelbar gegenüberliegend positioniert sind.

Ein besonderer Vorteil der Verwendung eines solchen Transponderchips, insbesondere in Form eines RFID-Chips ist, dass dieser Chip gleichzeitig auch als Speicherelement verwendet werden kann. Dies bietet die besonders zweckmäßige Möglichkeit, gesteuert über die Steuerungseinrichtung über das Sensorelement in dem Chip, insbesondere in dem RIFD-Chip Informationen, insbesondere Betriebsparameter für den schneckenwellenspezifischen Betrieb des Extruders oder einer weiteren Einrichtung oder die Gebrauchsdauer der Extruderschnecke abzuspeichern. Das heißt, dass der Chip als Informationsträger für zusätzliche Informationen als die reine Schneckenidentifikationsinformationen dient. Auf ihm können entsprechende Betriebsparameter, also einzustellende Verfahrensparameter, die für den schneckenwellenspezifischen Extruderbetrieb oder die entsprechende Steuerung der weiteren Einrichtungen (Zuführeinrichtungen, Heizelemente etc.) erforderlich sind, abgespeichert werden. Das heißt, dass jede Schnecke letztlich die entsprechenden Betriebsparameter respektive Verfahrensinformationen mit sich führt. Wird folglich die Extruderschnecke an einem anderen Extruder verbaut, so können über die Steuerungseinrichtung automatisch die schneckenspezifischen Betriebsparameter ausgelesen werden und entsprechend eingestellt werden. Sie sind also nicht zwingend steuerungseinrichtungsseitig vorzuhalten. Alternativ respektive zusätzlich können auch Informationen, die beispielsweise der Dokumentation der Schneckenlaufzeiten dienen, im Chip abgelegt werden. Diese Informationen können bei Bedarf auch an der ausgebauten Extruderschnecke abgelesen werden, beispielsweise in einem Schneckenlager, wo die Schnecken bevorratet werden. Es kann nun an dieser Stelle erfasst werden, wie lange eine bestimmte Schnecke bereits im Betrieb ist, und ob etwaige Wartungsarbeiten durchzuführen sind etc.

Alternativ zur Verwendung eines Chips mit zugeordnetem Lesegerät kann ein Informationselement auch in Form eines Metallelements oder eines Magnetelements und das Sensorelement als einen Wirbelstromsensor ausgeführt werden. Auch das Metallelement oder das Magnetelement sind fest und unlösbar mit der Schnecke verbunden. Wird dieses Metallelement oder das Magnetelement in die Nähe des Wirbelstromsensors gebracht respektive in dessen Nähe bewegt, so kommt es zur Induktion eines Wirbelstroms im Sensor. Die Höhe des induzierten Stroms hängt wiederum spezifisch von dem Metallelement oder Magnetelement ab. Über die Induktionsstromhöhe kann folglich eine Schneckencodierung erreicht werden, da den unterschiedlichen verbaubaren Extruderschnecken spezifische Metall- oder Magnetelemente zugeordnet sind. Denkbar wäre es auch, mehrere solcher Magnet- oder Metallelemente um den Umfang verteilt anzuordnen, so dass eine Schneckenrotation zu einem definierten Induktionsstrommuster führt, das wiederum informationscodierend ist. In diesem Fall würde die Informationserfassung insbesondere im Falle einer im Testbetrieb erfolgenden Schneckenrotation erfasst werden. Das Metall- oder Magnetelement wäre hier also ein an der Schnecke angeordnetes, sich nicht um den Schneckenumfang erstreckendes Element. Alternativ ist aber auch denkbar, ein solches Element in Form eines an der Schnecke angeordneten Rings auszuführen. Dieser Ring würde folglich beim Einschieben der Schnecke positionsunabhängig von der Winkelstellung der Schnecke zwangsläufig am Wirbelstromsensor vorbeigeführt werden, wodurch der Wirbelstrom induziert wird. Das Metallelement ist zweckmäßigerweise aus einer Metalllegierung, wobei die entsprechenden, den einzelnen Schnecken zugeordneten Metallelemente sich in der jeweiligen Metalllegierung unterscheiden, was zu den unterschiedlich hohen Induktionsströmen führt. Im Falle eines Magnetelements wird zweckmäßigerweise ein permanentmagnetisches Material verwendet.

Eine dritte Alternative hinsichtlich der Ausgestaltung eines Informationselements sieht vor, einen optisch abtastbaren Code, insbesondere in Form eines Barcodes, zu verwenden, und als Sensorelement ein Codelesegerät, insbesondere ein Barcodelesegerät zu nutzen. Auch hier erfolgt eine berührungslose Abtastung in optischer Form. Dabei kann z. B. der Barcode in Umfangsrichtung verlaufen, so dass er im Rahmen einer ersten Schneckenrotation erfasst wird. Alternativ wäre es auch denkbar, den Barcode quasi in Schneckenlängsrichtung umlaufend anzuordnen, so dass er, dann positionsunabhängig von der Schneckenposition beim Einschieben, zwangsläufig erfasst wird, wenn er an dem Codeleser vorbeibewegt wird. Alternativ zu einem solchen Barcode kann natürlich auch ein anderer, beispielsweise reflektierender Code über entsprechend angeordnete Reflektionsmuster oder sonstige Form- oder Farbmuster und Ähnliches verwendet werden.

Der Code, insbesondere der Barcode kann dabei direkt in das Schneckenmaterial eingearbeitet sein. Denkbar ist es aber auch, ihn in Form eines Codeträgers an der Extruderschnecke anzuordnen.

Hinsichtlich der Positionierung des Informationselements an der Extruderschnecke und der Positionierung des Sensorelements sind unterschiedliche Ausgestaltungen denkbar. Das Informationselement selbst ist zweckmäßigerweise im Bereich des mit dem Getriebe, direkt oder über eine Muffenkupplung, verbundenen Endes der Extruderschnecke angeordnet, da sich dort ein etwas längerer Wellen- oder Schaftabschnitt befindet, an dem das Informationselement ohne weiteres positioniert werden kann. Das Sensorelement kann an unterschiedlichen Stellen am Extrudergestell positioniert sein. Denkbar ist, es bezogen auf die Montagestellung der Extruderschnecke getriebenah anzuordnen, so dass das Informationselement bei montierter Schnecke im Erfassungsbereich des Sensorelements liegt. Alternativ könnte das Sensorelement auch am Austragsende des Arbeitsteils positioniert sein, so dass das Informationselement beim Einschieben der Extruderschnecke zwangsläufig am Sensorelement vorbeibewegt wird.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Prinzipdarstellung eines erfindungsgemäßen Extruders,
- Fig. 2: eine vergrößerte Detailansicht des Bereichs der Extruderschneckenverbindung zum Getriebe mit an den Extruderschnecken angeordneten Chips als Informationsträgern und diesen zugeordneten Chiplesegeräten als Sensorelementen,
- Fig. 3: eine Prinzipdarstellung einer Ausgestaltung mit einem Informationselement in Form eines Rings und einem Sensorelement in Form eines Wirbelstromsensors,
- Fig. 4: eine Prinzipdarstellung einer Ausgestaltung mit mehreren um den Umfang verteilten Metall- oder Magnetelementen und einem Sensorelement in Form eines Wirbelstromsensors,
- Fig. 5: eine Prinzipdarstellung einer Ausgestaltung mit einem Informationselement in Form eines Barcodes und einem als Barcodeleser ausgestalteten Sensorelement, und
- Fig. 6: eine Prinzipdarstellung einer Ausgestaltung mit einem umfangsmäßig angeordneten Informationselement in Form eines Barcodes und einem Barcodeleser.

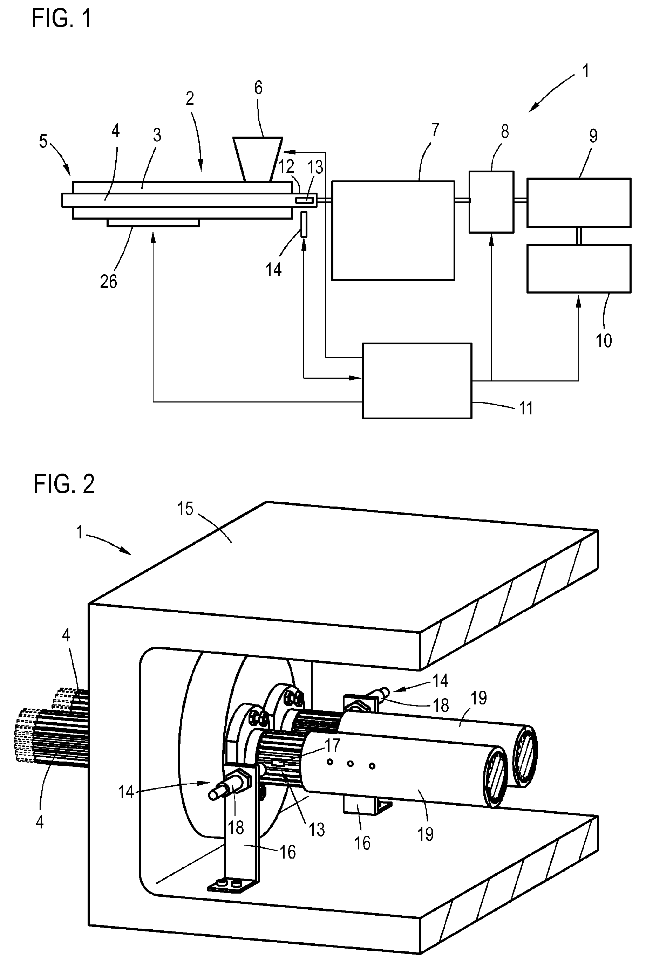

Fig. 1 zeigt in Form einer Prinzipdarstellung einen erfindungsgemäßen Extruder 1, umfassend ein Arbeitsteil 2 mit einem Zylinder 3, der wie zumeist üblich aus einer Vielzahl einzelner, aneinander gereihter und miteinander verbundener Zylindersegmente besteht. In dem Zylinder 3 ist, hier hervorgehoben darstellt, wenigstens eine Extruderschnecke 4 entnehmbar angeordnet, die vom Austragsende 5 des Arbeitsteil 2 her eingeschoben wird. Selbstverständlich können im Falle eines Doppelschneckenextruders auch zwei solcher Extruderschnecken 4 in der dann als Brillenbohrung ausgeführten Zylinderbohrung eingesetzt werden.

Am Arbeitsteil 2 angeordnet respektive ihm zugeordnet sind des Weiteren zusätzliche Einrichtungen in Form einer Zuführeinrichtung 6 sowie einer Heizeinrichtung 26. Über die Zuführeinrichtung 6 (es können selbstverständlich auch mehrere solcher Zuführeinrichtungen 6 vorgesehen sein) werden der oder die zu verarbeitenden Materialien aufgegeben. Über die Heizeinrichtung 26 (oder mehrere separate Heizeinrichtungen) kann der Zylinder 3 temperiert werden.

Der Extruder 1 umfasst ferner ein Getriebe 7, das über eine schaltbare Kupplung 8 mit einem Motor 9 gekoppelt ist. Dieser wird über einen Frequenzumrichter 10 angesteuert. Das Getriebe 7 selbst ist beispielsweise über eine Muffenkupplung oder Ähnliches mit der oder den Extruderschnecken 4 drehfest verbunden.

Vorgesehen ist ferner eine Steuerungseinrichtung 11, die im gezeigten Beispiel den Umrichter 10 und über diesen den Betrieb des Motors 9 hinsichtlich des vom Motor 9 erzeugten respektive gelieferten Drehmoments sowie der Drehzahl steuert. Die Steuerungseinrichtung 11 steuert des Weiteren die schaltbare Kupplung 8, bei der es sich bervorzugt um eine druckbeaufschlagte Reibkupplung handelt, die aktiv geschaltet werden kann. Über die Steuerungseinrichtung 11 wird der Luftdruck, über den die Reibkupplungsscheiben zusammengepresst werden, gesteuert. Je nachdem, wie hoch der Anpressdruck der Scheiben ist, kann ein unterschiedlich hohes Drehmoment übertragen werden respektive ein unterschiedlich hohes Abschaltmoment im Falle einer Überlast eingestellt werden.

Wie durch die Pfeildarstellungen ferner angedeutet ist, steuert die Steuerungseinrichtung 11 auch den Betrieb der Zuführeinrichtung 6, also der Materialdosierung, wie auch den Betrieb der Heizeinrichtung 26.

Des Weiteren ist am Schaft 12 der hier gezeigten Extruderschnecke 4 ein Informationselement 13 fest angeordnet. Dieses Informationselement 13 enthält eine oder mehrere Informationen dahingehend, welcher Typ die Extruderschnecke 4 ist, ob es sich also um eine Kompaktschnecke oder um eine Steckschnecke, also eine Schnecke mit einer Schneckenwelle mit aufgestecktem Schneckenelementen handelt. Die eine oder mehreren Informationen können auch Informationen hinsichtlich der Art des Arbeitsverfahrens, dem diese konkrete Extruderschnecke zugeordnet ist respektive das mit ihr durchzuführen ist, enthalten. Diese Informationen zur Art des Arbeitsverfahrens können auch in Form von unmittelbar am Informationselement abgelegten Betriebsparametern, die seitens der Steuerungseinrichtung 11 zum Betrieb der von ihr gesteuerten Komponenten einzustellen respektive zu steuern sind, vorgesehen sein.

Weiterhin vorgesehen ist ein Sensorelement 14, das in der Lage ist, die am oder im Informationselement 13 codiert abgelegten Informationen zu erfassen. Je nachdem, um welche Art Informationselement es sich handelt, ist natürlich das Sensorelement 14 entsprechend ausgestaltet. Es kommuniziert mit der Steuerungseinrichtung 11 zumindest unidirektional, das heißt, dass die von ihm erfassten Informationen an die Steuerungseinrichtung 11 gegeben werden. Denkbar ist es aber auch, dass eine bidirektionale Kommunikation (wie durch den Doppelpfeil dargestellt ist) vorgesehen ist. In diesem Fall wäre das Sensorelement 14 zum Einspeichern von Informationen am Informationselement 13 selbst, das dann gleichzeitig als beschreibbares Speicherelement ausgeführt ist, ausgebildet. Dies ermöglicht es, Informationen, die steuerungseinrichtungsseitig gewonnen werden, wie beispielsweise Informationen über die Gebrauchsdauer der Extruderschnecke 4 und Ähnliches, aber auch entsprechende Betriebsparameter und Ähnliches unmittelbar im Informationselement 13 abzuspeichern, so dass diese Informationen an anderer Stelle, beispielsweise bei Verbau der Extruderschnecke 4 in einem anderen Extruder, dortseits wieder ausgelesen werden können.

Die Steuerungseinrichtung 11 ist nun in der Lage, nach der automatischen Erfassung der Informationen, die das Informationselement 13 in codierter Form trägt, durch das Sensorelement 14, die entsprechenden Informationen umzusetzen respektive die entsprechenden Steuerungsparameter einzustellen respektive abzuarbeiten. Gibt die Information beispielsweise an, dass es sich bei der Extruderschnecke 4 um eine Kompaktschnecke handelt, so wird seitens der Steuerungseinrichtung 11 ein entsprechender Steuerdatensatz geladen, über den der Umrichter 10 und damit der Motor 9 so angesteuert werden, dass ein höheres Drehmoment erzeugt wird, da Kompaktschnecken mit höheren Drehmomenten betrieben werden können. Gleichzeitig wird auch die schaltbare Kupplung 8 entsprechend angesteuert, um ein höheres Abschaltmoment zu installieren, also ein Überlastmoment, bei dessen Anliegen die Kupplung 8 automatisch öffnet. Selbstverständlich können auch entsprechende Drehzahlwerte, die schneckenspezifisch zu fahren sind, eingestellt werden.

Geben die codierten Informationen des Informationselements 13 konkrete Betriebsparameter an, die also ein konkretes, der Schnecke zugeordnetes Verfahren definieren, so werden diese automatisch seitens der Steuerungseinrichtung 11 eingeladen respektive abgearbeitet. Hierüber werden zusätzlich zu den Parametern Drehmoment und Drehzahl auch entsprechende Steuerparameter hinsichtlich der Zuführeinrichtung 6 wie auch der Heizeinrichtung 26 der Steuerung zugrunde gelegt.

Handelt es sich um einen Doppelschneckenextruder, so weist selbstverständlich jede Extruderschnecke ein entsprechendes Informationselement 13 auf, dem ein entsprechendes Sensorelement 14 zugeordnet ist. Da beiden Schnecken ein und demselben Verfahren zugeordnet sind und letztlich vom Typ her auch gleich sein müssen, müssen folglich die beiden Sensorelemente 14 gleiche Informationen auslesen. Der Steuerungseinrichtung 11 liegen folglich zwei Informationssätze zugrunde, die insofern gleich sein müssen, als es Informationen zum Schneckentyp wie zu zugeordneten Verfahrensarten respektive Betriebsparametern enthalten sind. Lediglich die konkreten Schneckenidentifizierungsinformationen unterscheiden sich. Die Steuerungseinrichtung 11 kann nun anhand dieser beiden Informationsdatensätze eine Plausibilitätsprüfung durchführen, um zu sehen, ob eben zwei gleichartige Schnecken verbaut sind. Hierüber kann folglich eine Redundanzprüfung hinsichtlich der korrekt verwendeten Schnecken 4 erfolgen. Ergeben sich Informationsdifferenzen, kann es sein, dass seitens der Steuerungseinrichtung 11 ein entsprechendes Alarmsignal oder Ähnliches ausgegeben wird und der Betrieb gesperrt werden.

Fig. 2 zeigt in Form einer vergrößerten Prinzipdarstellung einen Ausschnitt aus dem Extruder 1, der hier als Doppelschneckenextruder mit zwei Extruderschnecken 4 ausgeführt ist. Gezeigt ist ein Extrudergestell 15, an dem an beiden Seiten über entsprechende Träger 16 jeweils ein Sensorelement 14 angeordnet ist. An jeder Extruderschnecke 4 ist ein Informationselement 13 angeordnet, das im gezeigten Beispiel angenommenermaßen ein Chip, insbesondere ein RFID-Chip 17 ist. Jedes Sensorelement 14 ist folglich als Chiplesegerät 18 ausgeführt, der berührungslos die im jeweiligen Chip 17 hinterlegten Informationen auslesen kann. Über entsprechende Muffenkupplungen 19 sind die beiden Extruderschnecken 4 im Bereich ihrer schaftseitigen Verzahnungen mit dem Getriebe 7, das hier nicht gezeigt ist, verbunden.

Ein solcher RFID-Chip 17 kann gleichzeitig auch als Speicherchip verwendet werden. Das heißt, dass das jeweilige Chiplesegerät 18 auch zum Einschreiben von neuen Informationen im jeweiligen RFID-Chip 17 verwendet werden kann. Diese remanent abgespeicherten Informationen "wandern" quasi mit der jeweiligen Extruderschnecke 4 mit und können anderenorts, beispielsweise in einem anderen Extruder ausgelesen werden.

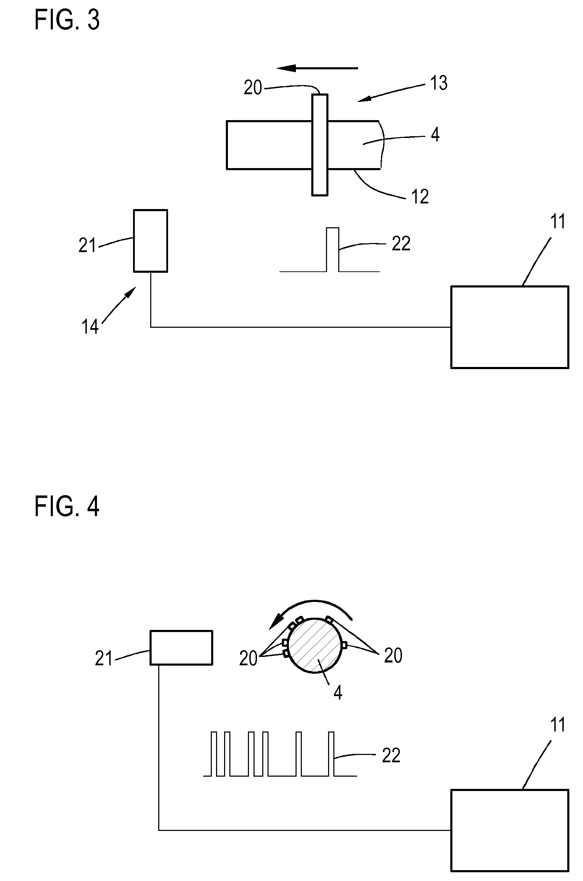

Fig. 3 zeigt eine Prinzipdarstellung einer weiteren Ausgestaltung eines Informationselements 13 und eines Sensorelements 14. Das Informationselement 13 ist hier als Metallelement 20 in Form eines auf den Schneckenschaft 12 aufgeschrumpften Rings ausgeführt. Das Sensorelement 14 ist als Wirbelstromsensor 21 ausgeführt. Wird beim Einschieben der Extruderschnecke 4, wie durch den Pfeil dargestellt ist, das Metallelement 20 am Wirbelstromsensor 21 vorbeibewegt, so wird ein Wirbelstrom, dargestellt durch das Symbol 22, im Wirbelstromsensor 21 induziert. Dieser induzierte Wirbelstrom respektive die Signalhöhe ist als codierte Information spezifisch für die konkrete Extruderschnecke 4. Dieses entsprechende Informationssignal wird an die Steuerungseinrichtung 11 zur weiteren Verarbeitung gegeben. Bereits diesem einen Signal, also dieser einen Information können unterschiedliche Informationsinhalte seitens der Steuerungseinrichtung 11 zugeordnet werden. Ihr kann beispielsweise eine Information hinsichtlich Schneckentyp (Kompaktschnecke/Steckschnecke) wie auch entsprechende Verfahrensinformationen zugeordnet werden. Denn die konkrete Höhe des induzierten Stroms ist eindeutig für eine bestimmte Schnecke, da es je nach Ausgestaltung des ringförmigen Metallelements 20 respektive dessen Materialwahl quasi beliebig eingestellt werden kann, so dass eine eindeutige Zuordnung des Signals zu einer bestimmten Schnecke möglich ist.

Fig. 4 zeigt ebenfalls eine Sensoreinrichtung basierend auf dem Wirbelstromprinzip. Hier sind jedoch um den Umfang der Extruderschnecke 4 respektive des Schaftes 12 mehrere einzelne Metallelemente 20 mit unterschiedlichem Abstand vorgesehen. Dreht nun die gesteckte Extruderschnecke 4, so werden die einzelnen Metallelemente 20 am Wirbelstromsensor 21 vorbeibewegt. Es kommt dabei zwangsläufig zu einem individuell profilierten Signal bzw. Wirbelstromverlauf, wie durch das Signal 22 dargestellt ist, das wiederum der Steuerungseinrichtung 11 gegeben wird. Sowohl über den jeweiligen Signalhub wie auch den konkreten Signalverlauf können individuelle Informationen übertragen werden, die seitens der Steuerungseinrichtung ausgelesen und umgesetzt werden können.

Alternativ zur Verwendung von Metallelementen 20 ist es selbstverständlich auch denkbar, entsprechende Magnetelemente beispielsweise in Form von Permanentmagneten anzuordnen. Auch über diese können entsprechende Wirbelströme im Wirbelstromsensor 21 induziert werden.

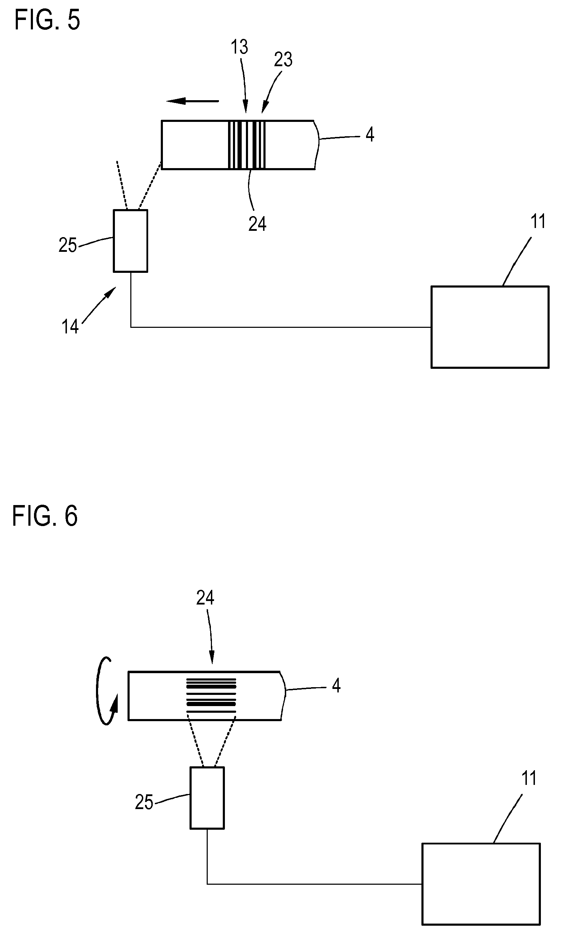

Fig. 5 zeigt eine Ausgestaltung einer Sensoreinrichtung, bei der an der Schneckenwelle 4 ein in ihrer Längsrichtung verlaufender, optisch abzutastender Code 23, hier in Form eines Barcodes 24 als Informationselement 13 angeordnet ist. Das Sensorelement 14 ist hier als Code- bzw. Barcodeleser 25 ausgeführt. Wird die Extruderschnecke 4 in Längsrichtung eingeschoben, so bewegt sich der Barcode 24 durch den Erfassungsbereich des Barcodelesers 25 und kann erfasst werden. Die Information wird wiederum an die Steuerungseinrichtung 11 gegeben, die daraufhin die entsprechenden der Information zugeordneten Betriebsparameter aus einem Speicher hochlädt oder unmittelbar die übertragenen Betriebsparameter umsetzt.

Fig. 6 zeigt schließlich eine vergleiche Ausgestaltung der Sensoreinrichtung, jedoch ist hier der Barcode 24 in Umfangsrichtung angebracht. Er befindet sich, wenn die Schnecke 4 gesteckt ist, im Erfassungsbereich des Barcodelesers 25 und wird bei einer Schneckenrotation erfasst.

Die entsprechenden Informationselemente 13 gleich welcher Art sind selbstverständlich fest und unlösbar mit der jeweiligen Extruderschnecke 4 verbunden. Im Falle eines RFID-Chips 17 kann dieser in einer entsprechenden Ausnehmung am Schaft eingesetzt und darin vergossen werden oder, da sehr kleinbauend, auch oberflächlich aufgesetzt werden etc. Die entsprechenden Metall- oder Magnetelemente 20 können ebenfalls oberflächlich aufgesetzt oder auch in Eintiefungen eingebracht werden. Der jeweilige Code 23 respektive Barcode 24 kann unmittelbar in das Schneckenmaterial eingearbeitet werden und folglich als Höhenrelief oder - profil ausgeführt werden. Denkbar ist es aber auch, einen separaten Informationsträger anzuordnen.

## Patentansprüche

1. Extruder, umfassend ein Arbeitsteil mit einem Zylinder und wenigstens einer darin entnehmbar angeordneten Extruderschnecke, einen Motor sowie ein vom Motor über eine Kupplung getrenntes Getriebe, das die Extruderschnecke antreibt, wobei die Extruderschnecke mit dem Getriebe lösbar verbunden ist, sowie eine den Betrieb des Motors oder wenigstens einer weiteren, insbesondere am Arbeitsteil vorgesehenen oder dem Arbeitsteil zugeordneten, Einrichtung steuernde Steuerungseinrichtung, **dadurch gekennzeichnet, dass** an der Extruderschnecke (4) wenigstens ein die Extruderschnecke (4) kennzeichnendes Informationselement (13) vorgesehen ist, das während oder nach Einsetzen der Extruderschnecke (4) in den Zylinder (3) oder Verbinden mit dem Getriebe (8) mittels eines Sensorelements (14) automatisch erfassbar ist, wobei die Steuerungseinrichtung (11) den Betrieb des Motors (9) oder der weiteren Einrichtung (6, 26) in Abhängigkeit der erfassten Information steuert, wobei das Informationselement (13) eine Information dahingehend, ob es eine Kompaktschnecke oder eine Extruderschnecke mit auf eine Schneckenwelle gesteckten Schneckenelementen ist, enthält, und wobei die Steuerungseinrichtung (11) dazu eingerichtet ist, in Abhängigkeit der erfassten Information einen Frequenzumrichter (10) zur Einstellung eines vom Motor (9) gelieferten Drehmoments und/oder der Motordrehzahl sowie die Kupplung (8), die als im Abschaltmoment umschaltbare Kupplung (8) ausgeführt ist, in Abhängigkeit der erfassten Information zur Nachführung des Abschaltmoments zu steuern.

2. Extruder nach Anspruch 1, **dadurch gekennzeichnet, dass** das Informationselement (13) eine Information dahingehend, welcher Art Arbeitsverfahren die Extruderschnecke (4) zugeordnet ist, enthält.

3. Extruder nach Anspruch 1 oder 2, **dadurch gekennzeichnet, dass** die Kupplung (8) eine druckbeaufschlagte Reibkupplung ist.

4. Extruder nach einem der vorangehenden Ansprüche, **dadurch gekennzeichnet, dass** die Steuerungseinrichtung (11) als weitere Einrichtung in Abhängigkeit der erfassten Information ein oder mehrere am Arbeitsteil (2) vorgesehene Heizeinrichtungen (26), den Betrieb einer oder mehrerer am Arbeitsteil angeordneter Zuführeinrichtungen (6) oder den Betrieb einer dem Arbeitsteil nachgeschalteten Pumpe steuert.

5. Extruder nach einem der vorangehenden Ansprüche, **dadurch gekennzeichnet, dass** die Steuerungseinrichtung (11) zur Speicherung schneckenbezogener Informationen basierend auf der erfassten Information ausgebildet ist.

6. Extruder nach einem der vorangehenden Ansprüche, **dadurch gekennzeichnet, dass** das Informationselement (13) ein Chip (17), insbesondere ein RFID-Chip und das Sensorelement (14) ein berührungslos arbeitendes Chiplesegerät (18), insbesondere ein RFID-Lesegerät ist.

7. Extruder nach Anspruch 6, **dadurch gekennzeichnet, dass** gesteuert über die Steuerungseinrichtung (11) über das Sensorelement (14) in dem Chip (17), insbesondere dem RFID-Chip Informationen, insbesondere Betriebsparameter für den schneckenwellenspezifischen Betrieb des Extruders oder einer weiteren Einrichtung oder die Gebrauchsdauer der Extruderschnecke (4) speicherbar sind.

8. Extruder nach einem der Ansprüche 1 bis 5, **dadurch gekennzeichnet, dass** das Informationselement (13) ein Metallelement (20) oder Magnetelement und das Sensorelement (14) ein Wirbelstromsensor (21) ist.

9. Extruder nach Anspruch 8, **dadurch gekennzeichnet, dass** das Metall- oder Magnetelement (20) ein an der Extruderschnecke (4) angeordnetes, sich nicht um den Schneckenumfang erstreckendes Element oder ein an der Extruderschnecke (4) angeordneter Ring aus einer Metalllegierung oder aus einem permanentmagnetischen Material ist.

10. Extruder nacheinem der Ansprüche 1 bis 5, **dadurch gekennzeichnet, dass** das Informationselement (13) ein optisch abtastbarer Code (23), insbesondere ein Barcode (24) und das Sensorelement (14) ein Codelesegerät, insbesondere ein Barcodelesegerät (25) ist.

11. Extruder nach Anspruch 10, **dadurch gekennzeichnet, dass** der Code (23), insbesondere der Barcode (24) direkt in das Schneckenmaterial eingearbeitet ist, oder in Form eines Codeträgers an der Extruderschnecke (4) angebracht ist.

12. Extruder nach einem der vorangehenden Ansprüche, **dadurch gekennzeichnet, dass** das Informationselement (4) im Bereich des mit dem Getriebe (8), direkt oder über eine Muffenkupplung (19), verbundenen Endes der Extruderschnecke (4) und das Sensorelement (13) ein einem Extrudergestell (15) benachbart zu dem Bereich, in dem das Informationselement (13) angeordnet ist, oder am Austragsende (5) des Arbeitsteils (2) vorgesehen ist.

## Claims

1. Extruder comprising an working unit having a cylinder and at least one extruder screw which is arranged in the said cylinder such that it can be removed, a motor and a gear unit which is separated from the motor by means of a clutch and which drives the extruder screw, wherein the extruder screw is releasably connected to the gear unit, and also a control device which controls the operation of the motor or at least of a further device which, in particular, is provided on the working unit or is associated with the working unit, **characterized in that** at least one information element (13) which identifies the extruder screw (4) and which, during or after insertion of the extruder screw (4) into the cylinder (3) or connection to the gear unit (8), can be automatically acquired by means of a sensor element (14), is provided on the extruder screw (4), wherein the control device (11) controls the operation of the motor (9) or of the further device (6, 26) depending on the acquired information, wherein the information element (13) contains an item of information pertaining to whether it is a compact screw or an extruder screw having screw elements which are pushed onto a screw shaft, and wherein, depending on the acquired information, the control device (11) is designed to control a frequency inverter (10) for setting a torque which is supplied by the motor (9) and/or the motor rotation speed, and also the clutch (8), which is implemented as a clutch (8) which can be switched over at the cut-out torque, depending on the acquired information in order to track the cut-out torque.

2. Extruder according to Claim 1, **characterized in that** the information element (13) contains an item of information pertaining to which type of operating method the extruder screw (4) is associated with.

3. Extruder according to Claim 1 or 2, **characterized in that** the clutch (8) is a pressure-loaded friction clutch.

4. Extruder according to one of the preceding claims, **characterized in that**, depending on the acquired information, the control device (11) controls, as a further device, one or more heating devices (26) which are provided on the working unit (2), the operation of one or more supply devices (6) which are arranged on the working unit, or the operation of a pump which is connected downstream of the working unit.

5. Extruder according to one of the preceding claims, **characterized in that** the control device (11) is designed to store information relating to the screws, based on the acquired information.

6. Extruder according to one of the preceding claims, **characterized in that** the information element (13) is a chip (17), in particular an RFID chip, and the sensor element (14) is a chip reader (18), in particular an RFID reader, which operates in contactless manner.

7. Extruder according to Claim 6, **characterized in that**, in a manner controlled by means of the control device (11) by way of the sensor element (14), items of information, in particular operating parameters for the screw shaft-specific operation of the extruder or of a further device or the service life of the extruder screw (4), can be stored in the chip (17), in particular the RFID chip.

8. Extruder according to one of Claims 1 to 5, **characterized in that** the information element (13) is a metal element (20) or a magnet element, and the sensor element (14) is an eddy current sensor (21).

9. Extruder according to Claim 8, **characterized in that** the metal or magnet element (20) is an element which is arranged on the extruder screw (4) and does not extend around the circumference of the screw, or a ring which is composed of a metal alloy or of a permanent-magnet material and is arranged on the extruder screw (4).

10. Extruder according to one of Claims 1 to 5, **characterized in that** the information element (13) is a code (23) which can be optically scanned, in particular a barcode (24), and the sensor element (14) is a code reader, in particular a barcode reader (25).

11. Extruder according to Claim 10, **characterized in that** the code (23), in particular the barcode (24), is directly incorporated in the screw material or is fitted to the extruder screw (4) in the form of a code carrier.

12. Extruder according to one of the preceding claims, **characterized in that** the information element (4) is arranged in the region of that end of the extruder screw (4) which is connected to the gear unit (8) directly or by means of a collar coupling (19), and the sensor element (13) is provided a to an extruder frame (15) adjacent to the region in which the information element (13) is arranged, or at the discharge end (5) of the working unit (2).

## Revendications

1. Extrudeuse comprenant
une partie de travail dotée d'un cylindre, d'au moins une vis d'extrusion disposée de manière amovible dans ce dernier, d'un moteur ainsi que d'une transmission séparée du moteur par un embrayage et qui entraîne la vis d'extrusion, la vis d'extrusion étant reliée de manière libérable à la transmission,
ainsi qu'un dispositif de commande qui commande le fonctionnement du moteur ou d'au moins un autre dispositif prévu sur la partie de travail ou associé à la partie de travail,
**caractérisée en ce que**
au moins un élément d'information (13) qui caractérise la vis d'extrusion (4) est prévu sur la vis d'extrusion (4) et peut être saisi automatiquement au moyen d'un élément de capteur (14) pendant ou après l'insertion de la vis d'extrusion (4) dans le cylindre (3) ou sa liaison à la transmission (8),
**en ce que** le dispositif de commande (11) commande le fonctionnement du moteur (9) ou de l'autre dispositif (6, 26) en fonction de l'information saisie,
**en ce que** l'élément d'information (13) contient une information indiquant s'il s'agit d'une vis compacte ou d'une vis d'extrudeuse présentant des éléments de vis enfichés sur un arbre de vis et
**en ce que** le dispositif de commande (11) est conçu pour commander en fonction de l'information saisie un convertisseur de fréquence (10) qui règle le couple de rotation délivré par le moteur (9) et/ou la vitesse de rotation du moteur ainsi que l'embrayage (8) réalisé comme embrayage (8) apte à être commuté en fonction du couple de débranchement, pour suivre le couple de débranchement en fonction de l'information saisie.

2. Extrudeuse selon la revendication 1, **caractérisée en ce que** l'élément d'information (13) contient une information qui indique quel type de procédé de travail est associé à la vis d'extrusion (4).

3. Extrudeuse selon les revendications 1 ou 2, **caractérisée en ce que** l'embrayage (8) est un embrayage à frottement sollicité en pression.

4. Extrudeuse selon l'une des revendications précédentes, **caractérisée en ce que** le dispositif de commande (11) commande d'autres dispositifs en fonction de l'information saisie, à savoir un ou plusieurs dispositifs de chauffage (26) prévus sur la partie de travail (2), le fonctionnement d'un ou plusieurs dispositifs d'amenée (6) disposés sur la partie de travail ou le fonctionnement d'une pompe raccordée en aval de la partie de travail.

5. Extrudeuse selon l'une des revendications précédentes, **caractérisée en ce que** le dispositif de commande (11) est configuré pour conserver en mémoire des informations concernant la vis, sur la base des informations saisies.

6. Extrudeuse selon l'une des revendications précédentes, **caractérisée en ce que** l'élément d'information (13) est une puce (17), en particulier une puce RFID et **en ce que** l'élément de capteur (14) est un appareil (18) de lecture de puce travaillant sans contact, en particulier un appareil de lecture RFID.

7. Extrudeuse selon la revendication 6, **caractérisée en ce que** sous la commande du dispositif de commande (11), des informations contenues dans la puce (17) et en particulier la puce RFID, en particulier des paramètres de fonctionnement permettant un fonctionnement de l'extrudeuse de manière spécifique à l'arbre de la vis ou d'un autre dispositif ou de la durée d'utilisation de la vis d'extrusion (4), peuvent être conservés en mémoire par l'intermédiaire de l'élément de capteur (14).

8. Extrudeuse selon l'une des revendications 1 à 5, **caractérisée en ce que** l'élément d'information (13) est un élément métallique (20) ou un élément magnétique et l'élément de capteur (14) un capteur (21) de courants de Foucault.

9. Extrudeuse selon la revendication 8, **caractérisée en ce que** l'élément métallique ou magnétique (20) est un élément disposé sur la vis d'extrusion (4) et qui ne s'étend pas sur toute la périphérie de la vis ou un anneau en un alliage métallique ou un matériau à magnétisation permanente disposé sur la vis d'extrudeuse (4).

10. Extrudeuse selon l'une des revendications 1 à 5, **caractérisée en ce que** l'élément d'information (13) est un code (23) apte à être capté optiquement, en particulier un code à barres (24), et **en ce que** l'élément de capteur (14) est un appareil de lecture de code, en particulier un appareil (25) de lecture de code à barres.

11. Extrudeuse selon la revendication 10, **caractérisée en ce que** le code (23), en particulier le code à barres (24), est incorporé directement dans le matériau de la vis ou est appliqué sur la vis d'extrusion (4) sous la forme d'un porte-code.

12. Extrudeuse selon l'une des revendications précédentes, **caractérisée en ce que** l'élément d'information (4) est prévu au niveau de l'extrémité de la vis d'extrusion (4) reliée à la transmission (8), directement ou par l'intermédiaire d'un accouplement à manchon (19), et **en ce que** l'élément de capteur (13) est prévu un sur un bâti (15) de l'extrudeuse ou voisinage de la partie dans laquelle l'élément d'information (13) est disposé ou à l'extrémité de sortie (5) de la partie de travail (2).
